# EUROPEAN PATENT SPECIFICATION

(11) **EP 3 189 755 B1**
(45) Date of publication and mention of the grant of the patent: **14.11.2018**
(21) Application number: 16820620.9
(22) Date of filing: 04.01.2016
(51) Int. Cl.: A47J 27/00, A47J 36/02

(54) **COMPOSITE BRAZE WELDING AND INDUCTION HEATING-TYPE COOKING TOOL**
DURCH HARTLÖTEN HERGESTELLTES ZUSAMMENGESETZTES INDUKTIONSKOCHWERKZEUG
OUTIL DE CUISSON COMPOSITE DE TYPE À CHAUFFAGE PAR INDUCTION ET SOUDOBRASAGE

(30) Priority: 08.07.2015 CN 201510396508; 08.07.2015 CN 201520487473 U
(43) Date of publication of application: 12.07.2017
(73) Proprietor: ZHEJIANG NOVIA INDUSTRY & TRADE CO., LTD, Jin Yanshan Industry Zone Quan Xi Town, Wu Yi County Zhejiang 321200 (CN)
(72) Inventor: HU, Huacheng, Wu Yi County Zhejiang 321200 (CN); PAN, Guoxiang, Wu Yi County Zhejiang 321200 (CN)
(74) Representative: Keil & Schaafhausen Patent- und Rechtsanwälte PartGmbB
(86) International application number: PCT/CN2016/000001
(87) International publication number: WO 2017/004962

(56) References cited:
- EP-A1- 0 677 264
- EP-A1- 2 105 071
- CN-A- 1 154 228
- CN-A- 101 754 707
- CN-U- 204 764 973
- CN-Y- 2 580 870
- KR-A- 20030 028 529
- KR-A- 20100 117 410
- US-A- 5 487 329
- US-A- 5 532 461
- US-A1- 2005 204 928

## Description

### Technical Field:

The current invention is related to a cooking utensil (such as pots), especially a brazed induction heating cooking utensil.

### Technical Background:

It is well known that the advantages of aluminum cooking utensils (such as pots) are being light, durable, quick to heat, even heat conduction and not easy to corrode. Therefore aluminum has become the first choice for most branded middle to high class cooking utensils. However, it has a main disadvantage of not being able to be heated on induction cooking plates.

In order to solve this problem, the Chinese utility model (CN 201167839 Y) discloses a cooking utensil which has a bottom that can be used for induction heating. The utensil comprises a container and a thermal distribution or diffusion plate in the form of a round plate, wherein the container is made of a first material (such as aluminum) and the outer surface of the bottom of the container is provided with a plurality of lugs with conical cutting head, and wherein the thermal distribution or diffusion plate is made of a ferromagnetic thermal conductive material (such as stainless iron) and features a plurality of holes. During installation, said round plate has an inner surface and an outer surface. Said lugs are inserted into said holes and are partially deformed due to abutment against the round plate. Each hole of the round plate features a flange which extends from said inner surface. Each hole of the round plate also features an enlargement part close to said outer surface. This product can be heated directly on the induction cooker through the thermal distribution or diffusion plate at the bottom of the container. However, due to the presence of the holes on the thermal distribution or diffusion plate which are used to connect with the lugs on the bottom of the container, the real heating area of the utensil is compromised significantly.

In order to further solve the above mentioned problem, the Chinese utility (CN 201243933 Y) discloses a no-hole composite bottom aluminum pot. The pot comprises a pot body and a bottom-wrapping sheet which is connected with the bottom of the pot body. The no-hole composite-bottom aluminum pot is characterized in that the outer surface of the pot bottom is connected with the aluminum sheet through brazing, and the aluminum sheet is connected with the no-hole composite-bottom sheet (stainless iron sheet) through the brazing. The bottom wrapping sheet needs not to be provided with a groove with a through hole, and the utility model features simple technical processing and lower production costs. In comparison with CN 201167839 Y, the pot of this utility model does not have holes or grooves in the bottom wrapping plate (stainless sheet) which are used to connect with the pot bottom. As a result, the actual heating area of the pot bottom has been significantly increased. However, this product still has the following problems:
(1) When the aluminum pot is used on the induction stove, due to the eddying effect of magnetic field of the bottom-wrapping plate (stainless iron sheet), the heating on the pot bottom is not even, wherein the middle part of the pot bottom has a very high temperature. This leads to the fact that during cooking, the food in the middle of the pot is burned whereas the food at the peripheral of the pot is not yet done. This compromises the quality of the food dramatically.
(2) Since the pot bottom is wrapped with bottom wrapping plate (stainless iron sheet), production indications cannot be carved onto the pot bottom (such as, product log, product name, etc.)
(3) During brazing of the bottom-wrapping plate (stainless iron sheet) of the aluminum bottom, the positioning is difficult, which leads to a position offset between the bottom-wrapping sheet and the bottom of the aluminum pot and the quality of the product is compromised.

US 2005204928 A1 discloses a device for cooking food is disclosed herein. The device comprises a vessel provided with a bottom having an internal face and an opposed external face. The device also comprises a base having an intermediate layer fastened to the external face and a surface layer fastened to and covering the intermediate layer. The surface layer is pierced by at least one aperture, which is intended to fitted with an ornamental piece that is directly bonded, by a hot pressing operation, to the intermediate layer so that the ornamental piece extends so as to be continuous with the surface layer.

### Content of the Invention:

The current invention intends to provide a brazed induction heating cooking utensil, which solve the above mentioned technical problems. The product of the current invention features a big and even heating area. The bottom of the product of the current invention can be carved with product labels, which is tasteful. The ferromagnetic heat conducting material is easy to be positioned during manufacture and can prevent an overflow of the brazing material.

The current invention realizes the above identified purpose as follows:
A brazed induction heating cooking utensil, comprising a utensil body made from a first material, wherein the outer surface of the bottom of the utensil body is brazed with a transition material and is connected with the inner surface of a thermal distribution plate via brazing, wherein the thermal distribution plate is made of ferromagnetic heat conducting material, characterized in that
--- the outer surface of the bottom of the utensil body is provided with a groove in the middle, wherein the periphery of the bottom of the groove is further surrounded with a closed groove, wherein the closed groove is a further extension of the depth of said groove;
--- the thermal distribution plate is provided with a hole in the middle, the form and the position of which corresponds with said groove, wherein the hole is surrounded by an inward fold-over structure, the size and position of which corresponds with the closed groove, wherein when the thermal distribution plate is brazed with the outer surface of the bottom of the utensil body, the inward fold-over structure extends into said groove or inserts into the closed groove.

Said brazed induction heating cooking utensil, characterized in that said first material is aluminum or aluminum alloy, said ferromagnetic heat conducting material is stainless iron, and the brazed transition material is high purity aluminum with a purity of more than 99%.

Said brazed induction heating cooking utensil, characterized in that the cross section of the closed groove is a rectangular groove, a U-formed groove or a V-formed grove.

Said brazed induction heating cooking utensil, characterized in that said groove and the closed groove have an integral external wall, wherein the external wall of the closed groove has an inward inclination.

Said brazed induction heating cooking utensil , characterized in that said inward fold-over structure is vertical to the thermal distribution plate.

Said brazed induction heating cooking utensil , characterized in that the thermal distribution plate is peripherally featured with an edge-wrapping structure which corresponds with the bottom of the utensil body.

Said brazed induction heating cooking utensil , characterized in that the cross section of the groove of the utensil body is circular, and the thermal distribution plate is provided with a circular ring which corresponds with the size and position of said groove, wherein the circular ring is provided with round holes.

The current invention features the following advantages:
1. The bottom of the cooking utensil of the current invention has a thermal distribution plate made of ferromagnetic heat conducting material, and therefore the utensil can be used directly on an induction stove. The thermal distribution plate of the current invention only has on hole in its middle and does not have other holes or grooves, and therefore and heating area of the thermal distribution plate is relatively big. The thermal distribution plate of the current invention has a hole in its middle, which solves the problem caused by the eddying effect of the magnetic field as well as the uneven heating problem at the bottom of the utensil. During cooking, the food which contacts the bottom of the utensil can be cooked evenly, and uneven distribution of cooked and raw food will not occur.
2. Through the hole in the middle of the thermal distribution plate, the groove in the middle of the outer surface of the bottom of the utensil body can be seen. The manufacturer or seller can carve the product information directly onto the bottom of the groove (such as product logo, product name, pattern, etc.).
3. The current invention has an inward fold-over structure, a groove as well as a closed groove, which facilitates the installation and the positioning of the thermal distribution plate. The purpose of the positioning is to guarantee that there appears no offset when the thermal distribution plate is brazed with the outer surface of the bottom of the utensil body. In addition, the inward fold-over structure inserts into the closed groove. During the brazing process, the inward fold-over structure functions as a gate in the closed groove, and can cooperate with the closed groove with certain depth to prevent the overflow of the brazing material. It improves the quality of the brazing and reduces the work load for cleaning the overflowed brazing material.

### Figures:

- Fig. 1: shows the structure of a preferred embodiment of the current invention.
- Fig. 2: shows the structure of the thermal distribution plate of a preferred embodiment of the current invention.
- Fig. 3: shows the structure of a preferred embodiment of the current invention before brazing.

### Embodiments:

The current invention is further illustrated with the following embodiments. These embodiments serve only to further illustrate the invention without limiting the scope of protection. The immaterial improvements or changes made by people skilled in the art does not exceed the scope of protection of the current invention.

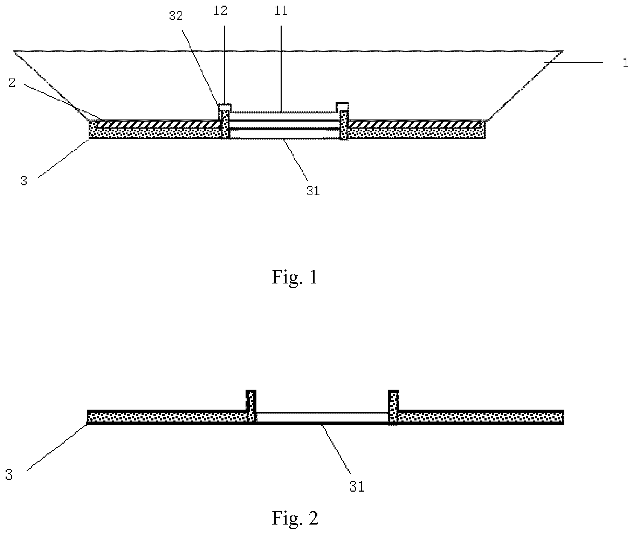

Figs. 1 and 2 show an embodiment of the current invention. A brazed induction heating cooking utensil, comprising a utensil body 1 made from aluminum or aluminum alloy, wherein the outer surface of the bottom of the utensil body 1 is brazed with a transition material 2 and is connected with the inner surface of a thermal distribution plate 3 via brazing, wherein the thermal distribution plate 3 is made of ferromagnetic heat conducting material, characterized in that
--- the outer surface of the bottom of the utensil body 1 is provided with a groove 11 in the middle, wherein the periphery of the bottom of the groove is further surrounded with a closed groove 12, wherein the closed groove 12 is a further extension of the depth of said groove 11;
--- the thermal distribution plate 3 is provided with a hole 31 in the middle, the form and the position of which corresponds with said groove, wherein the hole 31 is surrounded by an inward fold-over structure 32, the size and position of which corresponds with the closed groove 12, wherein when the thermal distribution plate 3 is brazed with the outer surface of the bottom of the utensil body 1, the inward fold-over structure 32 extends into said groove 11 or inserts into the closed groove 12. The brazed transition material 2 is high purity aluminum with a purity of more than 99%.

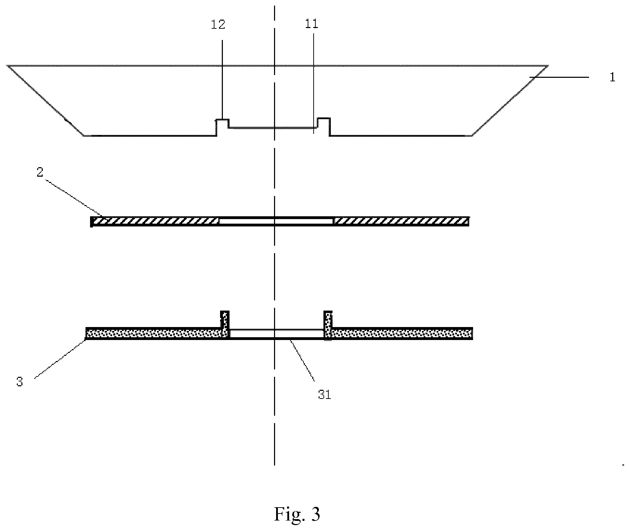

Fig. 3 shows the structure before brazing. The transition material 2 is provided between the outer surface of the bottom of the aluminum utensil body 1 and the thermal distribution plate 3, which serves to connect these two parts. The transition material 2 can also be provided with a hole in the middle. The shape and size of which corresponds with the groove. The inward fold-over structure 32 can pass through this hole during brazing.

The cross section of the closed groove can be a rectangular groove (as in this embodiment), a U-formed groove or a V-formed grove.

Preferably, said groove 11 and the closed groove 12 have an integral external wall (such as in this embodiment). Preferably, the external wall of the closed groove has an inward inclination, which can serve a guiding function when the inward fold-over structure 32 of the thermal distribution plate 3 is inserted in order to facilitate connection.

Preferably, said inward fold-over structure 32 is vertical to the thermal distribution plate 3, in order to ensure an accurate positioning during brazing welding.

Preferably, the thermal distribution plate 3 is peripherally featured with an edge-wrapping structure which corresponds with the bottom of the utensil body 1 to ensure an even heating of the bottom of the utensil body.

Preferably, the cross section of the groove of the utensil body 1 is circular, and the thermal distribution plate 3 is provided with a circular ring which corresponds with the size and position of said groove, wherein the circular ring is provided with round holes. Of course, the thermal distribution plate 3 can also be other reasonable forms other than circular (such as, rectangular, triangular). The hole in the middle of the thermal distribution plate 3 as well as its corresponding groove 11 at the bottom of the aluminum utensil body 1 and the closed groove 12 can also be other reasonable forms other than circular (such as, rectangular, triangular).

The current invention can be applied to aluminum pots, and can also be applied to cooking utensils made of other metal materials which have composite bottom.

## Claims

1. A brazed induction heating cooking utensil, comprising a utensil body (1) made from a first material, wherein the outer surface of the bottom of the utensil body is brazed with a transition material (2) and is connected with the inner surface of a thermal distribution plate (3) via brazing, wherein the thermal distribution plate (3) is made of ferromagnetic heat conducting material, **characterized in that**
--- the outer surface of the bottom of the utensil body (1) is provided with a groove (11) in the middle, wherein the periphery of the bottom of the groove (11) is further surrounded with a closed groove (12), wherein the closed groove (12) is a further extension of the depth of said groove (11);
--- the thermal distribution plate (3) is provided with a hole (31) in the middle, the form and the position of which corresponds with said groove (11), wherein the hole (31) is surrounded by an inward fold-over structure (32), the size and position of which corresponds with the closed groove (12), wherein when the thermal distribution plate (3) is brazed with the outer surface of the bottom of the utensil body (1), the inward fold-over structure (32) extends into said groove (11) or inserts into the closed groove (12).

2. The brazed induction heating cooking utensil according to claim 1, **characterized in that** said first material is aluminum or aluminum alloy, said ferromagnetic heat conducting material is stainless iron, and the brazed transition material (2) is high purity aluminum with a purity of more than 99%.

3. The brazed induction heating cooking utensil according to claim 1 or claim 2, **characterized in that** the cross section of the closed groove (12) is a rectangular groove, a U-formed groove or a V-formed grove.

4. The brazed induction heating cooking utensil according to claim 1 or claim 2, **characterized in that** said groove (11) and the closed groove (12) have an integral external wall, wherein the external wall of the closed groove (12) has an inward inclination.

5. The brazed induction heating cooking utensil according to claim 1 or claim 2, **characterized in that** said inward fold-over structure (32) is vertical to the thermal distribution plate (3).

6. The brazed induction heating cooking utensil according to claim 1 or claim 2, **characterized in that** the thermal distribution plate (3) is peripherally featured with an edge-wrapping structure which corresponds with the bottom of the utensil body (1).

7. The brazed induction heating cooking utensil according to claim 1 or claim 2, **characterized in that** the cross section of the groove (11) of the utensil body (1) is circular, and the thermal distribution plate (3) is provided with a circular ring which corresponds with the size and position of said groove (11), wherein the circular ring is provided with round holes.

## Patentansprüche

1. Hartgelötetes Induktionskochwerkzeug, umfassend einen Werkzeugkörper (1), der aus einem ersten Material hergestellt ist, wobei die Außenfläche der Unterseite des Werkzeugkörpers mit einem Übergangsmaterial (2) hartverlötet ist und mit der Innenfläche einer Wärmeverteilerplatte (3) mittels Hartlötung verbunden ist, wobei die Wärmeverteilerplatte (3) aus einem ferromagnetischen wärmeleitenden Material hergestellt ist, **dadurch gekennzeichnet, dass**
--- die Außenfläche der Unterseite des Werkzeugkörpers (1) mit einer Nut (11) in der Mitte versehen ist, wobei der Umfang der Unterseite der Nut (11) ferner von einer geschlossenen Nut (12) umgeben ist, wobei die geschlossene Nut (12) eine weitere Ausweitung der Tiefe der Nut (11) ist;
--- die Wärmeverteilerplatte (3) mit einem Loch (31) in der Mitte versehen ist, dessen Form und Position der Nut (11) entsprechen, wobei das Loch (31) von einer inneren Umfaltstruktur (32) umgeben ist, deren Größe und Position der geschlossenen Nut (12) entspricht, wobei, wenn die Wärmeverteilerplatte (3) mit der Außenfläche der Unterseite des Werkzeugkörpers (1) hartverlötet ist, sich die innere Umfaltstruktur (32) in die Nut (11) erstreckt oder in die geschlossene Nut (12) einfügt.

2. Hartgelötetes Induktionskochwerkzeug nach Anspruch 1, **dadurch gekennzeichnet, dass** das erste Material Aluminium oder eine Aluminiumlegierung ist, das ferromagnetische wärmeleitende Material rostfreies Eisen ist und das hartgelötete Übergangsmaterial (2) hochreines Aluminium mit einer Reinheit von mehr als 99 % ist.

3. Hartgelötetes Induktionskochwerkzeug nach Anspruch 1 oder Anspruch 2, **dadurch gekennzeichnet, dass** der Querschnitt der geschlossenen Nut (12) eine rechteckige Nut, eine U-förmige Nut oder eine V-förmige Nut ist.

4. Hartgelötetes Induktionskochwerkzeug nach Anspruch 1 oder Anspruch 2, **dadurch gekennzeichnet, dass** die Nut (11) und die geschlossene Nut (12) eine einstückige Außenwand aufweisen, wobei die Außenwand der geschlossenen Nut (12) eine Neigung nach innen aufweist.

5. Hartgelötetes Induktionskochwerkzeug nach Anspruch 1 oder Anspruch 2, **dadurch gekennzeichnet, dass** die innere Umfaltstruktur (32) vertikal zu der Wärmeverteilerplatte (3) ist.

6. Hartgelötetes Induktionskochwerkzeug nach Anspruch 1 oder Anspruch 2, **dadurch gekennzeichnet, dass** die Wärmeverteilerplatte (3) in Umfangsrichtung mit einer Randumhüllungsstruktur versehen ist, die der Unterseite des Werkzeugkörpers (1) entspricht.

7. Hartgelötetes Induktionskochwerkzeug nach Anspruch 1 oder Anspruch 2, **dadurch gekennzeichnet, dass** der Querschnitt der Nut (11) des Werkzeugkörpers (1) kreisförmig ist und die Wärmeverteilerplatte (3) mit einem kreisförmigen Ring versehen ist, der der Größe und Position der Nut (11) entspricht, wobei der kreisförmige Ring mit Rundlöchern versehen ist.

## Revendications

1. Ustensile de cuisson à chauffage par induction brasé, comprenant un corps d'ustensile (1) constitué d'un premier matériau, dans lequel la surface extérieure du bas du corps d'ustensile est brasé avec un matériau de transition (2) et relié à la surface intérieure d'un plateau de répartition thermique (3) par brasage, dans lequel le plateau de répartition thermique (3) est constitué d'un matériau thermo-conducteur ferromagnétique, **caractérisé en ce que**
- la surface extérieure du bas du corps d'ustensile (1) est pourvue d'une rainure (11) en son milieu, la périphérie du fond de la rainure (11) étant en outre entourée par une rainure fermée (12), la rainure fermée (12) étant une extension supplémentaire de la profondeur de ladite rainure (11) ;
- le plateau de répartition thermique (3) est pourvu d'un trou (31) en son milieu, dont la forme et la position correspondent à ladite rainure (11), le trou (31) étant entouré par une structure repliée vers l'intérieur (32), dont la taille et la position correspondent à la rainure fermée (12), où, lorsque le plateau de répartition thermique (3) est brasé avec la surface extérieure du bas du corps d'ustensile (1), la structure repliée vers l'intérieur (32) s'étend dans ladite rainure (11) ou s'insère dans la rainure fermée (12).

2. Ustensile de cuisson à chauffage par induction brasé selon la revendication 1, **caractérisé en ce que** ledit premier matériau est de l'aluminium ou un alliage d'aluminium, ledit matériau thermo-conducteur ferromagnétique est du fer inoxydable, et le matériau de transition (2) brasé est de l'aluminium de haute pureté avec une pureté supérieure à 99%.

3. Ustensile de cuisson à chauffage par induction brasé selon la revendication 1 ou la revendication 2, **caractérisé en ce que** la section transversale de la rainure fermée (12) est une rainure rectangulaire, une rainure en forme de U ou une rainure en forme de V.

4. Ustensile de cuisson à chauffage par induction brasé selon la revendication 1 ou la revendication 2, **caractérisé en ce que** ladite rainure (11) et la rainure fermée (12) comportent une paroi extérieure intégrale, la paroi extérieure de la rainure fermée (12) présentant une inclinaison vers l'intérieur.

5. Ustensile de cuisson à chauffage par induction brasé selon la revendication 1 ou la revendication 2, **caractérisé en ce que** ladite structure repliée vers l'intérieur (32) est verticale par rapport au plateau de répartition thermique (3).

6. Ustensile de cuisson à chauffage par induction brasé selon la revendication 1 ou la revendication 2, **caractérisé en ce que** le plateau de répartition thermique (3) est pourvu d'une structure enveloppant les bords, laquelle correspond au bas du corps d'ustensile (1).

7. Ustensile de cuisson à chauffage par induction brasé selon la revendication 1 ou la revendication 2, **caractérisé en ce que** la section transversale de la rainure (11) du corps d'ustensile (1) est circulaire, et le plateau de répartition thermique (3) est pourvu d'un anneau circulaire correspondant à la taille et à la position de ladite rainure (11), l'anneau circulaire étant pourvu de trous ronds.
